# EUROPÄISCHE PATENTANMELDUNG

(11) **EP 3 928 921 A1**
(43) Veröffentlichungstag der Anmeldung: **29.12.2021**
(21) Anmeldenummer: 20182020.6
(22) Anmeldetag: 24.06.2020
(51) Int. Cl.: B23Q 11/00

(54) **WERKZEUGMASCHINE**

(71) Anmelder: Siemens Aktiengesellschaft, 80333 München (DE)
(72) Erfinder: Bretschneider, Jochen, 88696 Owingen (DE); Schür, Torsten, 91058 Erlangen (DE); Schäfers, Elmar, 90763 Fürth (DE)

(57) **Zusammenfassung**

Die Erfindung betrifft eine Werkzeugmaschine umfassend zumindest ein Maschinenelement (10,20,22,30,32,33,34,35,36,37,40, 42,43,44,45), wobei an dem Maschinenelement (10,20,22,30,32, 33,34,35,36,37,40,42,43,44, 45) wenigstens ein Schwingungsdämpfer (11,21,21',31,31',41, 41') zur Dämpfung einer im Betrieb der Werkzeugmaschine (1, 2,3,4,100) entstehenden Schwingungsmode angeordnet ist, wobei die Schwingungsmode an einem Tool-Center-Point (12,38,46, 102) der Werkzeugmaschine (1,2,3,4,100) und an wenigstens einer Stelle des zumindest einen Maschinenelements (10,20,22,30,32,33,34,35,36,37,40, 42,43,44,45) ausgeprägt ist, wobei der wenigstens eine Schwingungsdämpfer (11,21,21',31,31',41, 41') an der wenigstens einen Stelle angeordnet ist.

## Beschreibung

Die Erfindung betrifft eine Werkzeugmaschine umfassend zumindest ein Maschinenelement, wobei an dem Maschinenelement wenigstens ein Schwingungsdämpfer zur Dämpfung einer im Betrieb der Werkzeugmaschine entstehenden Schwingungsmode angeordnet ist, die an einem Tool-Center-Point der Werkzeugmaschine ausgeprägt ist.

Die Werkzeugmaschinen der oben genannten Art sind aus dem Stand der Technik hinlänglich bekannt. EP 3 017 911 A1, EP 3 241 647 A1, EP 3 511 112 A1 und US 6 296 093 B1 zeigen mögliche Anordnungen von den Schwingungsdämpfern. Dabei werden die Schwingungsdämpfer an einer Ramme der Werkzeugmaschine so nahe wie möglich an einem Tool-Center-Point (TCP) montiert bzw. in der Ramme integriert, um Kollisionen bei Bearbeitung zu vermeiden.

Das Anbringen von Schwingungsdämpfern so nah wie möglich am TCP führt aber oft zu Problemen. Ist der Schwingungsdämpfer nicht in der Ramme integriert (US 6 296 093 B1), kann es zu unerwünschten Kollisionen im Arbeitsraum führen. Das Integrieren von Schwingungsdämpfern in die Ramme (EP 3 017 911 A1, EP 3 241 647 A1) ist aufwendig und aufgrund eines geringen Platzangebotes innerhalb der Ramme nicht immer möglich. Für eine Integration sind außerdem Schwingungsdämpfer in einer bestimmten, relativ kleinen Größe notwendig, was zu Leistungseinbußen und ergo zu einer schlechteren Dämpfung führt.

Die Aufgabe der vorliegenden Erfindung kann darin gesehen werden, eine Werkzeugmaschine mit Schwingungsdämpfern bereitzustellen, bei der die Schwingungsdämpfer auf eine einfache Weise und kostengünstig angebracht werden können und gleichzeitig die Qualität der Dämpfung verbessert werden kann.

Die vorgenannte Aufgabe wird mit einer Werkzeugmaschine der oben genannten Art erfindungsgemäß dadurch gelöst, dass die Schwingungsmode an wenigstens einer Stelle des zumindest einen Maschinenelements ausgeprägt ist, wobei der wenigstens eine Schwingungsdämpfer an der wenigstens einen Stelle angeordnet ist.

Die Schwingungen, die beim Betrieb einer Werkzeugmaschine entstehen, können unterschiedlichen Ursprungs sein. Die möglichen Anregungsquellen für Schwingungen sind die Antriebssysteme der Maschine, der Bearbeitungsprozess bzw. die Bearbeitung usw.

Die unerwünschten, beispielsweise transversalen Schwingungsmoden dieser Schwingungen sollen gedämpft werden. Eine unerwünschte Mode hat meist eine negative Auswirkung auf (im Kontext der Werkzeugmaschine) Produktivität, z.B. weil sie zu einem erhöhten Werkzeugverschleiß, und/oder zu Qualitätsverlusten und/oder Geräuschentwicklung und/oder produktivitätsbeschränkendem Rattern (Aufschwingen, was man dadurch verhindern muss, dass man die Zustellung des Werkzeuges ins Werkstück reduziert) führt. Die zu dämpfenden Moden sind in der Regel am Tool-Point-Center zu sehen.

Der Ausdruck, dass eine Schwingungsmode an einer Stelle ausgeprägt ist, bedeutet, dass die Schwingungsmode an dieser Stelle erfasst werden kann und vorzugsweise eine Amplitude aufweist, die in etwa gleich groß ist, wir die maximale Amplitude dieser Schwingungsmode.

In anderen Worten wird im Rahmen der Erfindung eine Mode, die an einem Tool-Center-Point stört, an einer anderen - auf oder in einem Maschinenelement angeordneten - Stelle gedämpft.

Unter dem Begriff "Tool-Center-Point" wird ein Werkzeugbezugspunkt (Werkzeugmittelpunkt) relativ zum Werkstück verstanden.

Die Stellen, an denen die Schwingungsmode ausgeprägt ist, z.B. einen Schwingungsbauch aufweist, können beispielsweise vor dem Anbringen der Schwingungsdämpfer ermittelt werden, indem eine Schwingung einer bestimmten Frequenz, z.B. einer niedrigen Frequenz (z.B. kleiner als 100 Hz), angeregt und die Maschinenelemente, beispielsweise mittels Schwingungssensoren vermessen werden.

Zur Unterdrückung oder Dämpfung derartiger Schwingungsmoden sind passive Schwingungsdämpfer und aktive Schwingungsdämpfer bekannt. Sowohl passive als auch aktive Schwingungsdämpfer dienen jedoch nicht dem eigentlichen Betrieb der Werkzeugmaschine. Sie dienen vielmehr dazu, eine beim Betrieb der Werkzeugmaschine auftretende unerwünschte Nebenwirkung - nämlich die Schwingungen und Vibrationen - zu reduzieren und nach Möglichkeit sogar zu eliminieren.

Passive Schwingungsdämpfer enthalten bewegliche Massen, die auf das Maschinenelement wirken können, dessen Vibration gedämpft werden soll. Aktive Schwingungsdämpfer enthalten jedoch aktiv angesteuerte Elemente, über die direkt eine Kraftwirkung auf das entsprechende Maschinenelement ausgeübt werden kann. Im Betrieb der Werkzeugmaschine wird der entsprechende aktive Schwingungsdämpfer auch aktiv angesteuert.

Bei einer Ausführungsform kann mit Vorteil vorgesehen sein, dass die Schwingungsmode an mindestens zwei Stellen des zumindest einen Maschinenelements ausgeprägt ist und die Werkzeugmaschine wenigstens zwei Schwingungsdämpfer aufweist, wobei unterschiedliche Schwingungsdämpfer an unterschiedlichen Stellen angeordnet sind. Diese unterschiedlichen Stellen können (müssen aber nicht) an unterschiedlichen Schwingungsbäuchen sein.

Darüber hinaus kann es zweckmäßig sein, wenn der wenigstens eine Schwingungsdämpfer an einer Außenfläche des zumindest einen Maschinenelements angeordnet ist oder teilweise in das zumindest eine Maschinenelement hineinragt oder in dem zumindest einen Maschinenelement derart integriert ist, dass er über eine Außenfläche des zumindest einen Maschinenelements nicht hinausragt.

Es kann mit Vorteil vorgesehen sein, dass die wenigstens eine oder jede Stelle an einem Schwingungsbauch der Schwingungsmode ist.

Bei einer Ausführungsform kann vorgesehen sein, dass der wenigstens eine Schwingungsdämpfer zur Dämpfung zumindest einer räumlichen Komponente der Schwingungsmode ausgebildet ist.

Es kann zweckdienlich sein, wenn der wenigstens eine Schwingungsdämpfer als ein aktiver Schwingungsdämpfer oder als ein Inertialdämpfer (inertial actuator) ausgebildet ist.

Bei einer Ausführungsform kann die Werkzeugmaschine ein weiteres Maschinenelement umfassen, wobei das zumindest eine Maschinenelement das weitere Maschinenelement trägt, wobei das weitere Maschinenelement in Bezug auf das zumindest eine Maschinenelement verfahrbar ist. Das Verfahren der Maschinenelemente kann mittels der Antriebe der Werkzeugmaschine erfolgen, wobei das verfahrbare Element in einer Verfahrrichtung lagegeregelt verfahrbar sein kann.

Bei einer Ausführungsform kann vorgesehen sein, dass das zumindest eine Maschinenelement als ein werkzeugseitiges Maschinenelement ausgebildet ist.

Darüber hinaus kann es zweckdienlich sein, wenn das werkzeugseitige Maschinenelement ein erstes Ende und ein zweites dem ersten Ende gegenüberliegendes Ende aufweist, wobei an dem ersten Ende eine Aufnahme ausgebildet ist und an dem zweiten Ende der wenigstens eine Schwingungsdämpfer angeordnet ist. Dabei kann in der Aufnahme ein Bearbeitungskopf mit einem Bearbeitungswerkzeug aufgenommen sein.

Darüber hinaus kann es vorgesehen sein, dass das zumindest eine Maschinenelement als ein werkstückseitiges Maschinenelement ausgebildet ist.

Bei einer Ausführungsform kann vorgesehen sein, dass das zumindest eine Maschinenelement als ein feststehendes Maschinenelement ausgebildet ist.

Das feststehende Maschinenelement kann z.B. ein Maschinenelement sein, welches ein oder mehr anderer Maschinenelemente trägt und in Bezug auf welches dieses Maschinenelement oder diese Maschinenelemente verfahrbar ist oder sind.

Bei einer Ausführungsform kann vorgesehen sein, dass im Betrieb der Werkzeugmaschine zwei oder mehr Schwingungsmoden entstehen.

Dabei kann es zweckmäßig sein, wenn (zur Dämpfung) pro Schwingungsmode zwei oder mehr Schwingungsdämpfer vorgesehen sind.

Es kann außerdem zweckdienlich sein, wenn der wenigstens eine Schwingungsdämpfer in eine Hauptausprägungsrichtung der Schwingungsmode ausgerichtet ist.

Im Folgenden wird die Erfindung anhand der in den Figuren dargestellten Ausführungsbeispiele näher beschrieben und erläutert. Es zeigen:
- FIG 1: eine Fräsmaschine,
- FIG 2: einen Ausschnitt einer Werkzeugmaschine,
- FIG 3: eine Werkzeugmaschine in Tischbauweise in perspektivischer Ansicht,
- FIG 4: die Werkzeugmaschine der FIG 3 in Seitenansicht, und
- FIG 5: eine weitere Werkzeugmaschine.

In den Ausführungsbeispielen und Figuren können gleiche oder gleich wirkende Elemente jeweils mit den gleichen Bezugszeichen versehen sein.

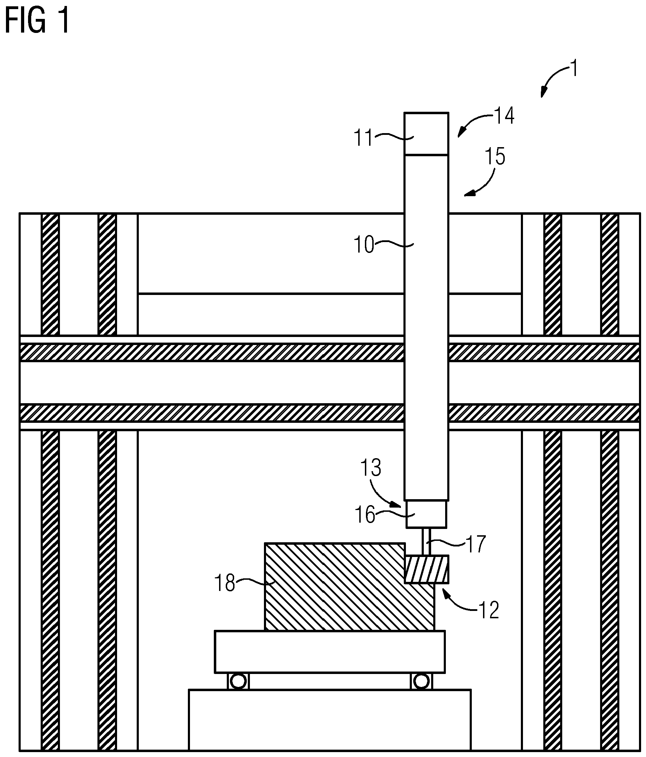

Zunächst wird auf FIG 1 Bezug genommen. Diese zeigt schematisch eine mögliche Ausführungsform der erfindungsgemäßen Werkzeugmaschine - eine Fräsmaschine 1.

Die Fräsmaschine 1 umfasst neben anderen eingezeichneten Maschinenelementen einen Tragarm 10, der in drei zueinander orthogonal stehenden Richtungen mittels hier nicht gezeigter Antriebe verfahrbar ist. Der Tragarm 10 - auch als Stößel bzw. Ramme genannt - ist ein auskragendes werkzeugseitiges Maschinenelement. Der Tragarm 10 weist im Querschnitt beispielsweise eine quadratische Form aus. Weiterhin kann der Tragarm 10 ein erstes Ende 13 und ein zweites Ende 14 umfassen, wobei das erste Ende 13 dem zweiten Ende 14 gegenüber liegt und eine Aufnahme aufweist. Die Ramme 10 trägt einen in der Aufnahme befestigten Bearbeitungskopf 16, in dem ein Bearbeitungswerkzeug 17 aufgenommen ist. Die beiden Enden 13 und 14 der Ramme 10 sind über Längsseiten 15 der Ramme 10 verbunden.

An dem zweiten Ende 14 ist ein Schwingungsdämpfer 11 angeordnet. Der Schwingungsdämpfer 11 ist an einer Außenfläche der Ramme 10 angebracht. Insbesondere ragt der Schwingungsdämpfer 11 nicht in das Innere der Ramme 10 hinein. In diesem Fall ist es leicht, den Schwingungsdämpfer 11 mit weiteren Vorrichtungen, beispielsweise mit einem Schwingungsdämpferregler (hier nicht gezeigt) zu verbinden. Alternativ es ist denkbar den Schwingungsdämpfer zumindest teilweise in das Innere der Ramme zu versenken, sodass er teilweise in die Ramme 10 hineinragt. Es ist auch möglich den Schwingungsdämpfer in die Ramme 10 vollständig zu integrieren, sodass er nicht über die Außenfläche der Ramme 10 hinausragt.

Im Betrieb der Fräsmaschine 1, wenn zum Beispiel ein Werkstück 18 mit dem Werkzeug 17 bearbeitet wird oder die Ramme 10 verfahren wird, werden Schwingungen in der Ramme 10 aber auch in anderen werkzeugseitigen und/oder werkstückseitigen, beweglichen (verfahrbaren) und/oder feststehenden Maschinenelementen erzeugt. Die Schwingungen können mehrere Schwingungsmoden umfassen. Eine oder mehrere dieser Schwingungsmoden können unerwünscht sein, weil sie sich beispielsweise negativ auf Produktivität, zum Beispiel durch einen erhöhten Werkzeugverschleiß und/oder verringerte Bearbeitungsqualität, zum Beispiel durch ungenaue Bearbeitung des Werkstücks auswirken und/oder für ein zu hohes Geräuschniveau verantwortlich sind. Dabei kann es sich z.B. um transversale Schwingungsmoden handeln. Die Schwingungsmode ist an einem Tool-Center-Point 12 der Fräsmaschine 1 ausgeprägt, z.B. sichtbar ist.

Des Weiteren ist die Schwingungsmode an wenigstens einer Stelle der Ramme 10 ausgeprägt, z.B. sichtbar.

Der Schwingungsdämpfer 11 ist zur Dämpfung einer solchen störenden/unerwünschten Schwingungsmode vorgesehen und an der wenigstens einen Stelle angeordnet. Diese Stelle kann beispielsweise als ein Schwingungsbauch ausgebildet sein. Figur 1 ist zu entnehmen, dass sich die wenigstens eine Stelle an dem zweiten Ende 14 der Ramme 10 befinden kann.

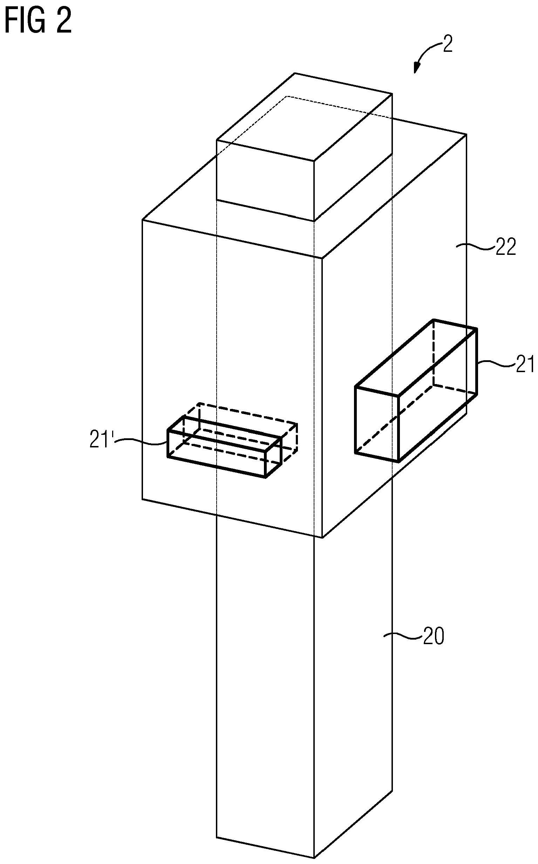

Somit kann eine Schwingungsmode, die an dem Tool-Center-Point stört, an einer anderen Stelle gedämpft werden. FIG 2 zeigt ein weiteres Beispiel, bei dem dieser allgemeine erfinderische Gedanke gültig ist. FIG 2 zeigt schematisch einen Ausschnitt einer Werkzeugmaschine 2. Die Werkzeugmaschine 2 kann als eine Maschine zum Fräsen, Bohren etc. ausgebildet sein. FIG 2 lässt einen Schlitten 22 erkennen, der einen Stößel 20 trägt. Der Stößel 20 ist in dem Schlitten 22 in seiner Längsrichtung verfahrbar angeordnet. An seinem in der Bildebene unteren Ende kann der Stößel 20 einen hier nicht gezeigten Bearbeitungskopf aufweisen. Im Betrieb der Werkzeugmaschine 2 können die in Bezug auf FIG 1 genannten unerwünschten Schwingungsmoden auftreten, wenn beispielsweise der Schlitten 22 in einer der beiden zu der Längsrichtung des Stößels 20 verfahren wird oder ein hier nicht gezeigtes Werkstück bearbeitet wird.

Die Schwingungsmode kann zwei- oder dreidimensional sein. FIG 2 lässt zwei Schwingungsdämpfer 21, 21' erkennen, wobei jeder Schwingungsdämpfer 21, 21' in eine Hauptausprägungsrichtung einer zweidimensionalen Schwingungsmode ausgerichtet ist. Der Schwingungsdämpfer 21 ist an einer Außenfläche des Schlitten 22 befestigt und dazu eingerichtet, die Schwingungsmode in X-Richtung zu dämpfen. Der Schwingungsdämpfer 21' ist in dem Schlitten 22 integriert und dazu eingerichtet, die Schwingungsmode in Y-Richtung zu dämpfen.

An dieser Stelle sei angemerkt, dass eine Schwingungsmode zwei oder mehr Schwingungsbäuche aufweisen kann und an zwei, drei, vier oder mehr Stellen ausgeprägt sein kann.

FIG 2 zeigt eine Anordnung, bei der beide Schwingungsdämpfer 21 und 21' an den Ausprägungsstellen der Schwingungsmode angeordnet sind, die zu dem gleichen Schwingungsbauch gehören. Eine Anordnung von Schwingungsdämpfern an unterschiedlichen Schwingungsbäuchen ist ebenfalls denkbar.

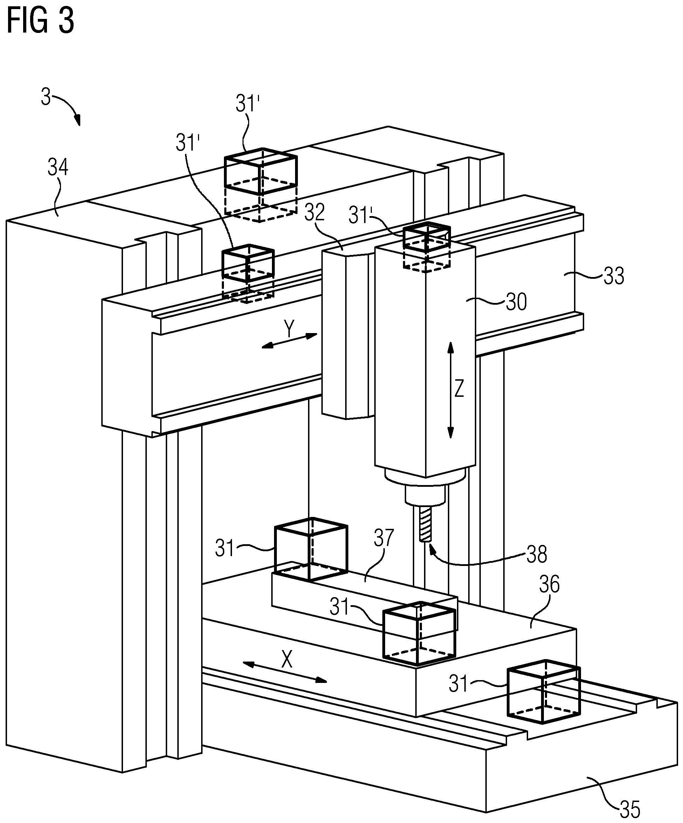

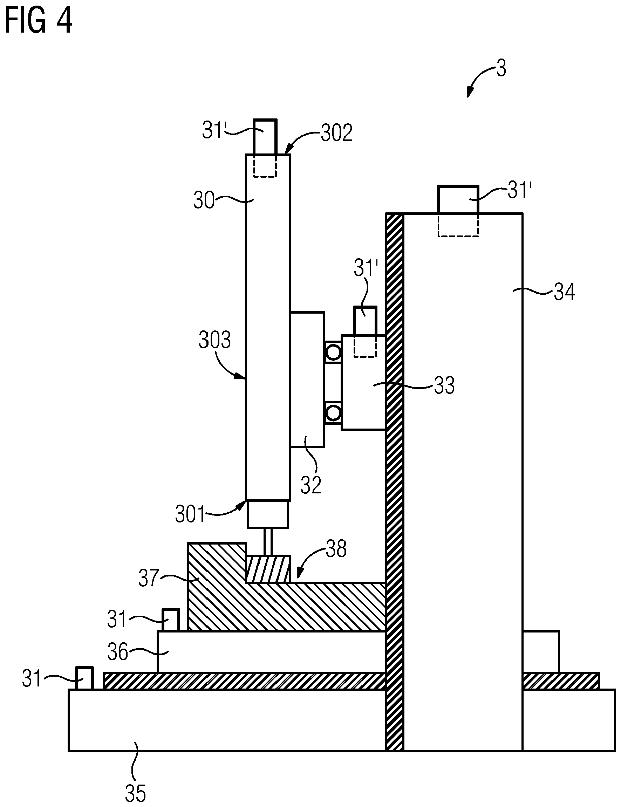

FIG 3 zeigt eine perspektivische Ansicht einer Werkzeugmaschine 3 in einer Tischbauweise. FIG 4 zeigt die Werkzeugmaschine der FIG 3 in Seitenansicht. Die Werkzeugmaschine 3 umfasst eine Ramme 30, die von einem Tragelement 32 (auch Führungswagen genannt) getragen und entlang W-Achse verfahrbar ist. Die W-Achse ist hier beispielsweise vertikal, parallel zu Z-Richtung. Das Trageelement 32 wird von einem Führungselement 33 getragen und an dem Führungselement in Y-Richtung bzw. Längsrichtung des Führungselements 33 verfahrbar angeordnet. Das Führungselement 33 ist an einem feststehenden Maschinenelement 34 - einem Portal - in Z-Richtung verfahrbar angeordnet. Die Ramme 30, das Trageelement 32 und das Führungselement 33 sind werkzeugseitige bewegliche Maschinenelemente. Das feststehende Maschinenelement 34 ist ein werkzeugseitiges unbewegliches Maschinenelement.

Darüber hinaus weist die Werkzeugmaschine 3 werkstückseitige Maschinenelemente auf: ein Maschinenbett 35 (ein feststehendes Maschinenelement), einen Maschinentisch 36 und einer Werkstückaufnahme bzw. einen Adapter 37. An dem Maschinenbett 35 sind Führungen ausgebildet, entlang derer der Maschinentisch 36 in X-Richtung verfahrbar angeordnet ist.

Die X-, Y- und Z-Richtung sind zueinander orthogonal. Antriebe der Werkzeugmaschine, die zur Bewegung der beweglichen Elemente in X-, Y-, Z-Richtung angeordnet sind, sind nicht gezeigt.

Die Ramme 30 ist als ein im Querschnitt quadratischer Tragarm ausgebildet und weist ein erstes und ein zweites Ende 301 und 302, die über Seitenflächen 303 verbunden sind.

An einem ersten Ende 301 der Ramme 30 ist ein Bearbeitungskopf mit einem Werkzeug montiert.

Auch im Betrieb diese Werkzeugmaschine 3 entstehen Schwingungen mit (zumindest) einer an dem Tool-Center-Point 38 ausgeprägten und störenden Schwingungsmode. Wie bereits erwähnt, kann die Schwingungsmode an mehreren Stellen der Werkzeugmaschine 3 ausgeprägt sein. FIG 3 zeigt, dass an jeder Stelle, an der die Schwingungsmode ausgeprägt sein kann, ein Schwingungsdämpfer 31, 31' platziert werden kann. Eine Zusammenschau der FIG 3 und FIG 4 lässt erkennen, dass an jedem der oben genannten Maschinenelemente 30, 32, 33, 34, 35, 36, 37 der Werkzeugmaschine 3 jeweils ein Schwingungsdämpfer 31, 31' montiert werden kann. Beispielsweise kann ein Schwingungsdämpfer 31' in ein zweites Ende 302 der Ramme 30, das dem ersten Ende 301 der Ramme 30 gegenüberliegt, teilweise integriert werden kann. Die Schwingungsdämpfer 31 sind an den jeweiligen Außenflächen montiert, wobei die Schwingungsdämpfer 31' in die jeweiligen Maschinenelemente 30, 33, 34 teilweise hineinragen. Es ist durchaus denkbar, dass ein Schwingungsdämpfer auch oben - in der Bildebene der FIG 4 - an dem Trageelement 32 angebracht, beispielsweise in das Trageelement 32 teilweise oder vollständig integriert ist.

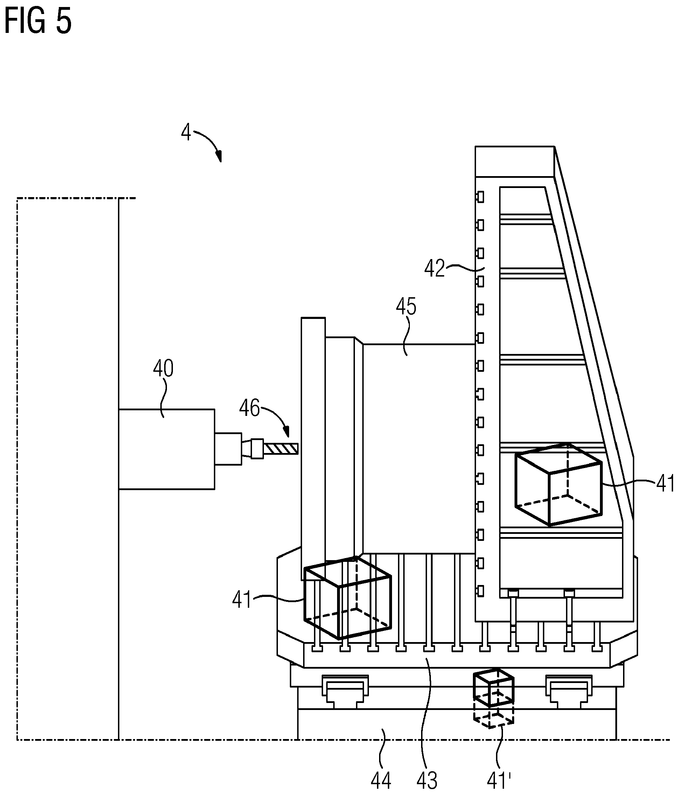

FIG 5 zeigt eine Werkzeugmaschine 4, die einen (zylinderförmigen) Stößel 40 bzw. Ramme und - werkstückseitig - eine Werkstückaufnahme 42, einen Maschinentisch 43 und ein Maschinenbett 44 umfasst. Die Werkzeugmaschine 4 umfasst auch weitere Elemente, die auf FIG 4 zu sehen sind, auf die hier aber nicht weiter eingegangen wird. FIG 4 lässt ebenfalls ein in dem Adapter 42 ein gespanntes Werkstück 45 erkennen. Der Tool-Center-Point 46 befindet sich am Ende eines in dem Stößel 40 aufgenommenen Werkzeugs.

Auch bei dieser Werkzeugmaschine 4 kommen die oben beschriebenen Schwingungen zum Vorschein, wenn die Werkzeugmaschine 4 im Betrieb ist. Zur Dämpfung von störenden Schwingungen sind hier insgesamt drei Schwingungsdämpfer 41, 41' - jeweils an der Werkstückaufnahme 42, an dem Maschinentisch 43 und an den Maschinenbett 44 - vorgesehen. Ein Schwingungsdämpfer kann an der Ramme 40 angeordnet sein (nicht gezeigt).

Die oben beschriebenen Werkzeugmaschinen sind im Allgemeinen zum Fräsen, Bohren, Schlichten, Schruppen, Anfasen etc. eingerichtet.

Die eingesetzten Schwingungsdämpfer sind vorzugsweise aktiv. Es können aber auch passive bzw. inertiale Dämpfer verwendet werden.

Die in Zusammenhang mit der vorliegenden Erfindung betrachteten, zu dämpfenden Schwingungsmoden weisen vorzugsweise eine niedrige Frequenz, beispielsweise kleiner als etwa 100 Hz, insbesondere zwischen etwa 50 Hz und etwa 70 Hz auf.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Werkzeugmaschine umfassend zumindest ein Maschinenelement (10,20,22,30,32,33,34,35,36,37,40,42,43,44), wobei an dem Maschinenelement (10,20,22,30,32,33,34,35,36,37,40,42,43,44) wenigstens ein Schwingungsdämpfer (11,21,21',31,31',41,41') zur Dämpfung einer im Betrieb der Werkzeugmaschine (1,2,3,4) entstehenden Schwingungsmode angeordnet ist, wobei die Schwingungsmode an einem Tool-Center-Point (12,38,46) der Werkzeugmaschine (1,2,3,4) und an wenigstens einer Stelle des zumindest einen Maschinenelements (10,20,22,30,32,33,34,35, 36,37,40,42,43,44) ausgeprägt ist, wobei der wenigstens eine Schwingungsdämpfer (11,21,21',31,31',41,41') an der wenigstens einen Stelle angeordnet ist.

2. Werkzeugmaschine nach Anspruch 1, wobei die Schwingungsmode an mindestens zwei Stellen des zumindest einen Maschinenelements (10,20,22,30,32,33,34,35,36,37,40,42,43,44) ausgeprägt ist und die Werkzeugmaschine (1,2,3,4) wenigstens zwei Schwingungsdämpfer (11,21,21',31,31',41,41') aufweist, wobei unterschiedliche Schwingungsdämpfer (11,21,21',31,31',41, 41') an unterschiedlichen Stellen angeordnet sind.

3. Werkzeugmaschine nach Anspruch 1 oder 2, wobei der wenigstens eine Schwingungsdämpfer (11,21,21',31,31',41,41') an einer Außenfläche des zumindest einen Maschinenelements (10, 20,22,30,32,33,34,35,36,37,40,42,43,44) angeordnet ist oder teilweise in das zumindest eine Maschinenelement (10,20,22, 30,32,33,34,35,36,37,40,42,43,44) hineinragt oder in dem zumindest einen Maschinenelement (10,20,22,30,32,33,34,35,36, 37,40,42,43,44) derart integriert ist, dass er über eine Au-βenfläche des zumindest einen Maschinenelements (10,20,22, 30,32,33,34,35,36,37,40,42,43,44) nicht hinausragt.

4. Werkzeugmaschine nach einem der Ansprüche 1 bis 3, wobei die Schwingungsmode an der wenigstens einen Stelle einen Schwingungsbauch aufweist.

5. Werkzeugmaschine nach einem der Ansprüche 1 bis 4, wobei der wenigstens eine Schwingungsdämpfer (11,21,21',31,31',41, 41') zur Dämpfung zumindest einer räumlichen Komponente der Schwingungsmode ausgebildet ist.

6. Werkzeugmaschine nach einem der Ansprüche 1 bis 5, wobei der wenigstens eine Schwingungsdämpfer (11,21,21',31,31',41, 41') als ein aktiver Schwingungsdämpfer ausgebildet ist.

7. Werkzeugmaschine nach einem der Ansprüche 1 bis 6, umfassend ein weiteres Maschinenelement, wobei das zumindest eine Maschinenelement das weitere Maschinenelement trägt, wobei das weitere Maschinenelement in Bezug auf das zumindest eine Maschinenelement verfahrbar ist.

8. Werkzeugmaschine nach einem der Ansprüche 1 bis 7, wobei das zumindest eine Maschinenelement als ein werkzeugseitiges Maschinenelement (10,20,22,30,33,34,40) ausgebildet ist.

9. Werkzeugmaschine nach Anspruch 8, wobei das werkzeugseitige Maschinenelement (10,30) ein erstes Ende (13,301) und ein zweites dem ersten Ende (13,301) gegenüberliegendes Ende (14, 302) aufweist, wobei an dem ersten Ende (13,301) eine Aufnahme ausgebildet ist und an dem zweiten Ende (14,302) der wenigstens eine Schwingungsdämpfer (11,31') angeordnet ist.

10. Werkzeugmaschine nach einem der Ansprüche 1 bis 7, wobei das zumindest eine Maschinenelement als ein werkstückseitiges Maschinenelement (35,36,37,42,43,44) ausgebildet ist.

11. Werkzeugmaschine nach einem der Ansprüche 1 bis 8 oder nach Anspruch 10, wobei das zumindest eine Maschinenelement als ein feststehendes Maschinenelement (34,44) ausgebildet ist.

12. Werkzeugmaschine nach einem der Ansprüche 1 bis 11, wobei im Betrieb der Werkzeugmaschine (1,2,3,4) zwei oder mehr Schwingungsmoden an der Werkzeugmaschine (1,2,3,4) ausgeprägt sind.

13. Werkzeugmaschine nach Anspruch 12, wobei pro Schwingungsmode zwei oder mehr Schwingungsdämpfer (11,21,21',31,31',41, 41') vorgesehen sind.

14. Werkzeugmaschine nach Anspruch 12 oder 13, wobei der wenigstens eine Schwingungsdämpfer (11,21,21',31,31',41,41') in eine Hauptausprägungsrichtung der Schwingungsmode ausgerichtet ist.
